(19) Europäisches Patentamt
European Patent Office
Office européen des brevets

(11) EP 3 193 194 A1

(12) **EUROPEAN PATENT APPLICATION**
published in accordance with Art. 153(4) EPC

(43) Date of publication:
**19.07.2017 Bulletin 2017/29**

(21) Application number: **15839276.1**

(22) Date of filing: **02.09.2015**

(51) Int Cl.:
***G02B 1/115*** *(2015.01)* ***B32B 7/02*** *(2006.01)*
***B32B 3/30*** *(2006.01)* ***G02B 5/02*** *(2006.01)*

(86) International application number:
**PCT/JP2015/004457**

(87) International publication number:
**WO 2016/038853 (17.03.2016 Gazette 2016/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **08.09.2014 JP 2014182642**

(71) Applicant: **Panasonic Intellectual Property Management Co., Ltd.**
**Osaka-shi, Osaka 540-6207 (JP)**

(72) Inventors:
- **OOISHI, Toshiharu**
  **Osaka-shi**
  **Osaka 540-6207/JP (JP)**
- **FUJIMOTO, Takahide**
  **Osaka-shi**
  **Osaka 540-6207/JP (JP)**

(74) Representative: **Grünecker Patent- und Rechtsanwälte**
**PartG mbB**
**Leopoldstraße 4**
**80802 München (DE)**

(54) **ANTI-REFLECTION MEMBER, AND PRODUCTION METHOD THEREFOR**

(57) An anti-reflection member includes an anti-glare layer including a fine irregular structure, and an anti-reflection layer formed over the anti-glare layer and including a plurality of films laminated on each other. In the anti-glare layer, a surface of the fine irregular structure having an inclination angle that results in a film thickness variation of the anti-reflection layer falling within ±20%, inclusive, in terms of film thickness occupies 60% or greater of an area in which the fine irregular structure is formed. The film thickness variation of the anti-reflection layer originates from a variation in the inclination angle of the surface of the fine irregular structure.

FIG. 2

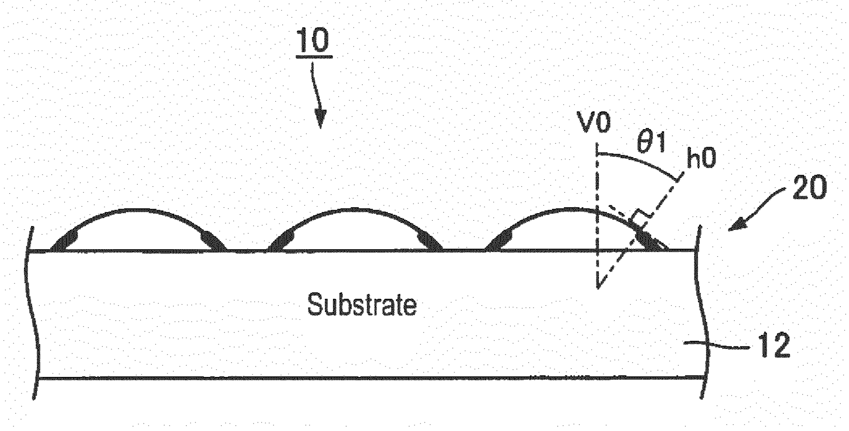


EP 3 193 194 A1

## Description

TECHNICAL FIELD

The present invention relates to an anti-reflection member and a method of manufacturing the same.

BACKGROUND ART

In recent years, display devices have been used for an increasing number of applications. Consequently, the display devices are more likely to be used under the circumstances that result in lower visibility, such as under the environment in which the display devices are exposed to ambient light or light from a lighting apparatus. For this reason, the demand for display panels of the display devices with improved anti-reflection performance has been increasing.

The techniques for treating reflection include an AR (anti-reflection) technique, in which reflected light is reduced by canceling out reflected lights with each other by using a multi-layered film, and an AG (anti-glare) technique, in which reflected light is diffused and made less perceptible by an anti-glare layer having a fine irregular structure. However, when reflection occurs due to the light from a lighting apparatus or the like, the AR technique permits the contour of the lighting apparatus to become visible, so the visibility of the display lowers in that regard. On the other hand, with the AG technique, diffused reflected light causes the reflecting portion to appear white, thereby degrading the visibility of the display.

As a conventional technique, Patent Literature (PTL) 1 discloses an anti-glare plastic film in which a transparent resin coated on a substrate is provided with a fine irregular pattern. Patent Literature (PTL) 2 discloses an anti-reflection film in which a low-refractive index layer is formed on an anti-glare layer having a fine irregular structure. The low-refractive index layer is formed by coating and curing a resin.

CITATION LIST

Patent Literature

PTL 1: Japanese Patent Unexamined Publication No. H06-234175
PTL 2: International Publication 2008/084604

SUMMERY OF INVENTION

The present invention provides an anti-reflection member having high anti-reflection performance and a method of manufacturing the same.

An anti-reflection member of an aspect of the present invention includes an anti-glare layer having a fine irregular structure, and an anti-reflection layer formed over the anti-glare layer and having a plurality of films laminated on each other. In the anti-glare layer, a surface of the fine irregular structure having an inclination angle that results in a film thickness variation of the anti-reflection layer falling within ±20%, inclusive, in terms of film thickness occupies 60% or greater of an area in which the fine irregular structure is formed, the film thickness variation of the anti-reflection layer originating from a variation in the inclination angle of the surface of the fine irregular structure.

A method of manufacturing an anti-reflection member of an aspect of the present invention includes: forming a fine irregular structure in a substrate by performing a molding process using a mold having an irregular surface so as to form an anti-glare layer; and forming, over the fine irregular structure, an anti-reflection layer including a plurality of films laminated on each other. The irregular surface of the mold is formed so that a surface of a transferred irregular surface having an inclination angle that results in a film thickness variation of the anti-reflection layer falling within ±20%, inclusive, in terms of film thickness occupies 60% or greater, the film thickness variation originating from an inclination angle variation of the transferred irregular surface.

The present invention allows the anti-reflection layer formed over the anti-glare layer to have desirable characteristics and improves the reflection treatment performance of the anti-reflection member. In addition, the present invention can reduce grooves or recessed portions surrounded by steep inclined surfaces, thereby suppressing the visibility deterioration due to contaminants adhering to the grooves or the recessed portions.

BRIEF DESCRIPTION OF DRAWINGS

Fig. 1 is a schematic view illustrating an anti-reflection member of a first exemplary embodiment.
Fig. 2 is a view for illustrating an inclination angle of a fine irregular structure of the first exemplary embodiment.
Fig. 3 is a schematic view illustrating an anti-reflection member of a second exemplary embodiment.
Fig. 4 is a view for illustrating an inclination angle of a fine irregular structure of the second exemplary embodiment.
Fig. 5 is a view illustrating an anti-reflection layer.
Fig. 6 is a graph showing the relationship between film thickness ratio and reflectivity of the anti-reflection layer.
Fig. 7A is a schematic view illustrating an inclination angle of one example of the fine irregular structure of a comparative example.
Fig. 7B is a top plan view of one example of the fine irregular structure of the comparative example.
Fig. 8A is a view for illustrating a first variation example of the shape of the anti-reflection member.
Fig. 8B is a view for illustrating a second variation example of the shape of the anti-reflection member.
Fig. 8C is a view for illustrating a third variation example of the shape of the anti-reflection member.
Fig. 8D is a view for illustrating a fourth variation example of the shape of the anti-reflection member.
Fig. 9A is a view for illustrating a first step in a first example of a method for preparing a mold for forming an anti-glare layer.
Fig. 9B is a view for illustrating a second step in the first example of the method for preparing the mold for forming the anti-glare layer.
Fig. 9C is a schematic view illustrating the final shape of the mold in the first example of the method for preparing the mold for forming the anti-glare layer.
Fig. 10A is a view for illustrating a first step in a second example of the method for preparing a mold for forming an anti-glare layer.
Fig. 10B is a view for illustrating a second step in the second example of the method for preparing the mold for forming the anti-glare layer.
Fig. 10C is a schematic view illustrating the final shape of the mold in the second example of the method for preparing the mold for forming the anti-glare layer.
Fig. 11 is a schematic view illustrating a fine irregular structure prepared using the mold shown in Fig. 10C.
Fig. 12A is a view for illustrating a first step in a third example of the method for preparing a mold for forming the anti-glare layer.
Fig. 12B is a schematic view illustrating the final shape of the mold in the third example of the method for preparing the mold for forming the anti-glare layer.
Fig. 13 is a schematic view illustrating a fine irregular structure prepared using the mold shown in Fig. 12B.

DESCRIPTION OF EMBODIMENTS

Prior to describing exemplary embodiments of the present invention, problems with conventional technology are described briefly. When an anti-reflection layer by the AR technique is provided over an anti-glare layer by the AG technique, the drawbacks of both techniques are compensated, so that the reflection treatment performance can be improved. However, if a multi-layer film of the anti-reflection layer is formed on the irregularities of the anti-glare layer without any consideration, variations in the film thickness occur due to the inclinations of the irregularities. Consequently, the anti-reflection layer does not yield good performance.
In addition, when the irregular structure of the anti-glare layer has grooves or recessed portions surrounded by steeply inclined surfaces with inclined surfaces, contaminants adhere to the grooves or the recessed portions, thereby lowering the visibility.
Hereinafter, exemplary embodiments of the present invention will be described in detail with reference to the drawings. In the exemplary embodiments, same elements are designated by the same reference signs and the description thereof is not repeated.

< Anti-reflection Member >

(First and Second Exemplary Embodiments)

Fig. 1 is a schematic view illustrating an anti-reflection member of a first exemplary embodiment. Fig. 2 is a view for illustrating an inclination angle of a fine irregular structure of the first exemplary embodiment.
Anti-reflection member 10 according to the first exemplary embodiment includes sheet-shaped substrate 12, fine irregular structure 20 formed on one surface of substrate 12, and anti-reflection layer 14 formed on top of fine irregular structure 20.
Fine irregular structure 20 functions as an anti-glare layer for diffusing light. Fine irregular structure 20 is a structure in which the surface has a multiplicity of irregularities (for example, a multiplicity of spherical surface-shaped convex portions 21). The horizontal pitch of the irregularities is within the range from 0.5 to 10 [μm], and a specific example is about 2 [μm]. The anti-glare layer of the present exemplary embodiment adopts a structure that does not contain microparticles causing light diffusion (also referred to as "haze") in the layer.

As illustrated in Fig. 2, fine irregular structure 20 is formed such that inclination angle θ of the irregular surface is controlled. In the first exemplary embodiment, fine irregular structure 20 is formed so that the surface having an inclination angle of equal to or less than specific angle θ1 = 36.8° occupies 60% or greater of the area, when viewed in plan, of the surface in which fine irregular structure 20 is formed. The inclination angle is indicated by an inclination angle from the top surface of substrate 12. In Fig. 2, the bold lines indicate the ranges exceeding specific angle θ1. In Fig. 2, line V0 indicates the perpendicular line to the top surface of substrate 12, and line h0 indicates the normal line to the irregular surface.

The portion having an inclination angle of equal to or less than specific angle θ1 enables anti-reflection layer 14 to provide good characteristics. Therefore, when the area of this portion increases, the anti-reflection performance of anti-reflection member 10 is improved. Accordingly, the area occupied by the portion in which the inclination angle is equal to or less than specific angle θ1 may preferably be set to 70% or greater, or more preferably 80% or greater, of the surface in which with fine irregular structure 20 is formed.

The reason for setting the proportion of the area in which the inclination angle is equal to or less than specific angle θ1 to be 60% or greater in the first exemplary embodiment will be described later.

The details of anti-reflection layer 14 will be described later.

Fig. 3 is a schematic view illustrating an anti-reflection member of a second exemplary embodiment. Fig. 4 is a view for illustrating an inclination angle of a fine irregular structure of the second exemplary embodiment.

Anti-reflection member 10A of the second exemplary embodiment includes sheet-shaped substrate 12, fine irregular structure 20 formed on one surface of substrate 12, and anti-reflection layer 14A formed on top of fine irregular structure 20.

As illustrated in Fig. 4, fine irregular structure 20 is formed such that inclination angle θ of the irregular surface is controlled. In the second exemplary embodiment, fine irregular structure 20 is formed so that the area in which the inclination angle is equal to or less than specific angle θ2 = 48.1° occupies 70% or greater of the area, when viewed in plan, of the surface in which fine irregular structure 20 is formed. In Fig. 4, the bold lines indicate the ranges exceeding specific angle 62.

The portion having an inclination angle of equal to or less than specific angle θ2 enables anti-reflection layer 14A to provide desirable characteristics. Accordingly, an increase of the area with this range leads to improved anti-reflection performance of anti-reflection member 10A. Accordingly, the area occupied by the portion in which the inclination angle is equal to or less than specific angle θ2 may preferably be set to 80% or greater, or more preferably 90% or greater, of the surface in which fine irregular structure 20 is formed.

The reason for setting the proportion of the area in which the inclination angle is equal to or less than specific angle θ2 to be 70% or greater in the second exemplary embodiment will be described later.

Fig. 5 is a view illustrating an example of the anti-reflection layer. Fig. 6 is a graph showing the relationship between film thickness ratio and reflectivity of the examples of the anti-reflection layer.

Each of anti-reflection layer 14, 14A is constructed by laminating three or more layers of a plurality of kinds of films. Each of anti-reflection layer 14, 14A is formed such that the refractive index and the film thickness of each of the films are controlled, and it reduces reflected light by overlapping light rays reflected at various interfaces at different phases to cancel out the light rays each other. The total thickness of each of anti-reflection layer 14, 14A varies depending on the types and numbers of the films, but it is typically from 300 to 500 nm, which is significantly thinner than the amount of irregularities of fine irregular structure 20. Each of anti-reflection layer 14, 14A is composed of, for example, a transparent metal oxide, such as $SiO_2$, $TiO_2$ or $Al_2O_3$.

Each of the films in anti-reflection layer 14, 14A may be formed using a dry process, such as vapor deposition or sputtering. Vacuum deposition and sputtering are included in the process of condensing a source material evaporated in vacuum onto a surface. Each of the films may also be formed using a wet process, such as chemical liquid phase growth. In each of anti-reflection layer 14, 14A, a thin film formed by a dry process and a thin film formed by a wet process may be laminated on each other. In other words, at least one of the films of anti-reflection layer 14, 14A may be either formed by a process of condensing a source material evaporated in vacuum onto a surface, or formed by a wet process.

As illustrated in Fig. 6, each of anti-reflection layer 14, 14A shows varied reflectivity of visible light as the film thickness changes. In the relationship graph of film thickness and reflectivity, there is a film thickness range with lower reflectivity than that in the other ranges. For example, the reflectivity in the range is equal to or less than 1 percent because the light rays reflected at various interfaces are cancelled out each other efficiently. When the film thickness is greater or less than this film thickness range, the reflectivity increases drastically.

In each of anti-reflection layer 14, 14A, when the median film thickness of the film thickness range resulting in low reflectivity is defined as a film thickness ratio of 1, the range of the film thickness ratio resulting in low reflectivity is from 0.8 to 1.2, as illustrated in Fig. 6.

Anti-reflection layer 14 of the first exemplary embodiment is formed so that a film thickness ratio of 1 is obtained when the inclination angle of the substrate is zero. Under this condition, in the portion having inclination angle $\theta$, the area to be coated with thin film particles increases corresponding to inclination angle $\theta$, with respect to a certain amount of thin film particles scattered by vapor deposition, for example. For this reason, the film thickness of the portion having inclination angle $\theta$ is thinner than the portion having an inclination angle of zero. Where the portion having an inclination angle of zero is assumed to have film thickness X, film thickness X1 of the portion having inclination angle $\theta$ is expressed by the following equation (1).

$$X1 = X \times \cos\theta \quad (1)$$

Therefore, in anti-reflection layer 14 of the first exemplary embodiment, the film thickness of the thin film that is formed on a surface having an inclination angle of 0° to specific angle $\theta 1$ (= 36.8°) results in a film thickness ratio from 1 to 0.8, as indicated by range W1 in Fig. 6. Within this film thickness range, the reflectivity becomes 1% or less, resulting in good anti-reflection performance. In the surface having an inclination angle exceeding specific angle $\theta 1$, the reflectivity of anti-reflection layer 14 drastically increases as the inclination angle increases.

As described above, according to the first exemplary embodiment, anti-reflection layer 14 yields good performance because the area resulting in an inclination angle of 0° to specific angle $\theta 1$ (= 36.8°) occupies 60% or greater.

Anti-reflection layer 14A of the second exemplary embodiment is formed so that a film thickness ratio of 1.2 is obtained when the inclination angle of the substrate is zero.

As described above, where the portion having an inclination angle of zero is assumed to have film thickness X, film thickness X1 of the portion having inclination angle $\theta$ is expressed by equation (1). Therefore, the film thickness of anti-reflection layer 14A that is formed on a surface having an inclination angle of 0° to specific angle $\theta 2$ (= 48.1°) results in a film thickness ratio of from 1.2 to 0.8, as indicated by range W2 in Fig. 6. Anti-reflection layer 14A having a film thickness falling within this film thickness range shows a reflectivity of 1% or less, resulting in preferable anti-reflection performance. In the surface having an inclination angle exceeding specific angle $\theta 2$, the reflectivity of anti-reflection layer 14A drastically increases as the inclination angle increases.

As described above, according to the second exemplary embodiment, anti-reflection layer 14 yields good performance because the area resulting in an inclination angle of 0° to specific angle $\theta 2$ (= 48.1°) occupies 70% or greater.

< Comparative Example >

Here, the following describes the reason for setting the area resulting in an inclination angle of equal to or less than specific angle $\theta 1$ to 60% or greater in the first exemplary embodiment and the reason for setting the area resulting in an inclination angle of equal to or less than specific angle $\theta 2$ to 70% or greater in the second exemplary embodiment, with reference to Figs. 7A and 7B.

Fig. 7A shows a schematic view illustrating an inclination angle of the fine irregular structure of a comparative example, and Fig. 7B shows a top plan view of the fine irregular structure of the comparative example.

The fine irregular structure of the comparative example shown in Figs. 7A and 7B is a model in which hemispheres having the same diameter are densely arrayed on one surface of substrate 50. The bold line portions in Fig. 7A and the hatched portions in Fig. 7B schematically represent the portions with inclination angles at which the film thickness ratio of the anti-reflection layer falls outside the range of 0.8 to 1.2.

Here, if the anti-reflection layer is prepared with a film thickness ratio of 1.0 on a flat surface, the inclination angle $\theta$ in Fig. 7A should be 36.8°. Likewise, if the anti-reflection layer is prepared with a film thickness ratio of 1.2 on a flat surface, the inclination angle $\theta$ in Fig. 7A should be 48.1°.

The proportion of the bold line portions in Fig. 7A relative to the area in which the fine irregular structure is formed is geometrically similar to the proportion of the hatched portions in triangle T shown in Fig. 7B, when viewed in plan. Reference symbol r2 represents the radius of the inner circle of the bold line portion when viewed in plan, and reference symbol r1 represents the radius of the outer circle of the bold line portion when viewed in plan. From these conditions, the proportion of the area other than the bold line portions when viewed in plan can be obtained in the following manner.

First, the length of one side of regular triangle T is 2 × r1, so area S0 thereof is obtained by the following equation (2).

$$S0 = \sqrt{3}\, r1^2 \quad (2)$$

Next, area S1 of the hatched portions in regular triangle T is obtained by the following equation (3).

$$S1 = (r1^2 - r2^2)\,\pi\,\frac{60}{360} \times 3 \qquad (3)$$

Proportion R1 of the area other than the bold line portions when viewed in plan, and the relationship between radii r1 and r2 are obtained by the following equations (4) and (5), respectively.

$$R1 = (S0 - S1) / S0 \qquad (4)$$

$$r2 = r1 \times \sin(\theta) \qquad (5)$$

From these results, proportion R1 of the area resulting in a film thickness ratio of from 0.8 to 1.2 when viewed in plan is 42% when the film is formed with a film thickness ratio of 1.0 (θ = 36.8°), or 60% when the film is formed with a film thickness ratio of 1.2 (0 = 48.1°), in the model of the above-described comparative example.

In the first exemplary embodiment, the proportion of the area resulting in a film thickness ratio of from 0.8 to 1.2 is 60% or greater when viewed in plan, which is sufficiently greater than 42%, the proportion obtained by the model in which merely hemispheres are densely arrayed and no special design consideration is made. This means that the particular structure of the first exemplary embodiment can provide the effect of the anti-reflection layer sufficiently.

In the second exemplary embodiment, the proportion of the area resulting in a film thickness ratio of from 0.8 to 1.2 is 70% or greater when viewed in plan, which is also sufficiently greater than 60%, the proportion obtained by the model in which merely hemispheres are densely arrayed and no special design consideration is made. This means that the particular structure of the second exemplary embodiment can also provide the effect of the anti-reflection layer sufficiently.

As described above, anti-reflection members 10 and 10A of the first and second exemplary embodiments can obtain the characteristics of AG technique by fine irregular structure 20 of the anti-glare layer, and good anti-reflection performance by anti-reflection layers 14 and 14A, respectively. Thus, anti-reflection members 10 and 10A having high reflection treatment performance are obtained.

In addition, with anti-reflection members 10 and 10A of the first and second exemplary embodiments, the grooves or recessed portions surrounded by steep inclined surfaces can be reduced by controlling the inclination angle of fine irregular structure 20. As a result, the visibility deterioration due to contaminants adhering to the grooves or recessed portions can also be suppressed.

In the foregoing first and second exemplary embodiments, examples in which a plurality of spherical surface-shaped convex portions 21 are formed as fine irregular structure 20. However, the shape of the irregularities is not limited thereto.

The foregoing first and second exemplary embodiments achieve desirable film thickness of anti-reflection layers 14 and 14A by controlling the inclination angle of fine irregular structure 20 and forming anti-reflection layer 14 or 14A having a film thickness ratio of 1 or a film thickness ratio of 1.2 onto the surface having an inclination angle of zero. However, the film formed on the surface having an inclination angle of zero need not have a film thickness ratio from 0.8 to 1.2. Even when the film formed on the surface having an inclination angle of zero has a film thickness ratio of 1.2 or greater, it is possible to control the film thickness variations of each of anti-reflection layers 14 and 14A to be within a film thickness ratio of ±20%, which is a low reflectivity region, by way of forming the inclination angles of fine irregular structure 20. It is also possible to control the proportion of the area resulting in such an inclination angle to be a certain proportion or greater.

Furthermore, as illustrated in Figs. 8A to 8D, the shape of the anti-reflection member is not limited to any particular shape. Anti-reflection members 10B to 10E may be in a plate shape as shown in Fig. 8A, a film shape as shown in Fig. 8B, a belt-like shape as shown in Fig. 8C, or a block-like shape as shown in Fig. 8C. In each of the shapes of anti-reflection members 10B to 10E, it is enough that at least one surface is provided with the anti-glare layer and the anti-reflection layer as described above.

Furthermore, the type, the number of laminated layers, and the film thickness of each of the thin films in anti-reflection layers 14 and 14A are not limited to the specific examples illustrated in the drawings, and may be varied in a number of ways. It is desirable that the number of the laminated thin films is three or more.

< Method of Manufacturing Anti-reflection member >

Next, an example of the method of manufacturing an anti-reflection member will be described.

A method of manufacturing an anti-reflection member includes an anti-glare layer forming step and an anti-reflection layer forming step, in the order of processing.

In the anti-glare layer forming step, mold 30 (see Fig. 9C) having a fine irregular structure, transparent substrate 12 (see Figs. 1 to 4), and a curable transparent resin are used. Mold 30 is, for example, a metal mold. Substrate 12 is, for example, a transparent resin or a transparent glass with low haze. Examples of the transparent resin include PET (polyethylene terephthalate), PC (polycarbonate), and acrylic resin. An applicable example of the curable resin includes an ultraviolet curable transparent resin.

Mold 30 has an irregular surface with controlled inclination angles. The irregular surface of mold 30 is formed so that a surface having an inclination angle that results in a film thickness variation of the anti-reflection layer falling within ±20% in terms of film thickness occupies 60% or greater of the transferred irregular surface. The film thickness variation originates from a variation in the inclination angle. Specifically, mold 30 for preparing anti-reflection member 10 of the first exemplary embodiment is formed so that the portion having an inclination angle of equal to or less than 36.8° occupies 60% or greater of the transferred irregular surface. Mold 30 for preparing anti-reflection member 10A of the second exemplary embodiment is formed so that the portion having an inclination angle of equal to or less than 48.1° occupies 60% or greater of the transferred irregular surface. The method for preparing mold 30 will be described later.

In the anti-glare layer forming step, molding using mold 30 is performed to cure a curable transparent resin on a top surface of substrate 12 into a shape in which irregularities of mold 30 are transferred. As a result, transparent fine irregular structure 20 is added on the top surface of substrate 12, whereby an anti-glare layer is formed.

In the anti-reflection layer forming step, a film forming process by a dry process or a wet process is performed a plurality of times for substrate 12 having fine irregular structure 20. Each of the film forming processes is performed while the film thickness of the thin film is being controlled. When manufacturing anti-reflection member 10 of the first exemplary embodiment, the film thickness is controlled so that an anti-reflection layer having a film thickness ratio of 1 is formed on a surface having an inclination angle of 0°. When manufacturing anti-reflection member 10A of the second exemplary embodiment, the film thickness is controlled so that an anti-reflection layer having a film thickness ratio of 1.2 is formed on a surface having an inclination angle of 0°. As a result, a predetermined anti-reflection layer is formed on fine irregular structure 20 of the predetermined anti-glare layer.

The above-described process makes it possible to manufacture anti-reflection members 10 and 10A of the first and second exemplary embodiments.

It is possible that the method of manufacturing an anti-reflection member may further include an additional film-forming process between the anti-glare layer forming step and the anti-reflection layer forming step.

< Method for Preparing Mold >

Next, examples of the method for preparing mold 30 used in the anti-glare layer forming step will be described.

Figs. 9A to 9C are views for illustrating a first example of the method for preparing the mold. Fig. 9A is an illustrative view of the first step, Fig. 9B is an illustrative view of the second step, and Fig. 9C is a schematic view illustrating the final shape of the mold.

In the first example of the method of preparing mold 30, mold member 31 is first processed by a blasting process, an etching process, or electrical discharge machining, so as to form irregularities in one surface of mold member 31 at an optical pitch that can provide an anti-glare effect, as illustrated in Fig. 9A. Next, as illustrated in Fig. 9B, lower end portions of the irregularities are removed by polishing or etching. The proportion of the area that results in a large inclination angle can be adjusted by a processing amount of polishing or etching in Fig. 9B.

This makes it possible to prepare mold 30 having such irregularities that fine irregular structure 20 of the first or second exemplary embodiment is transferred, as illustrated in Fig. 9C.

Figs. 10A to 10C are views for illustrating a second example of the method for preparing the mold. Fig. 10A is an illustrative view of the first step, Fig. 10B is an illustrative view of the second step, and Fig. 10C is a schematic view illustrating the final shape of the mold.

In the second example of the method of preparing mold 30, one surface of mold member 31 is first processed by a blasting process or an etching process to form irregularities in one surface of mold member 31 at an optical pitch causing an anti-glare effect, as illustrated in Fig. 10A. Next, as illustrated in Fig. 10B, an additional blasting process is performed using particles 32 having a smaller diameter than each recessed portion of the irregularities. In the additional blasting process, thin portions such as the lower end portions of the irregularities are removed in a greater amount, while thicker portions such as the central parts of the recessed portions are removed in a smaller amount. This makes it possible to prepare mold 30 having a fine irregular structure from which the areas with large inclination angles are removed, as illustrated in Fig. 10C.

Fig. 11 is a schematic view illustrating a fine irregular structure prepared using the mold shown in Fig. 10C.

Fine irregular structure 20A as shown in Fig. 11 can be prepared by forming the anti-glare layer using mold 30 of the second example. Fine irregular structure 20A is capable of controlling the proportion of the surface having an inclination angle exceeding a specific angle (indicated by bold lines in the figure) to a predetermined proportion or less.

Figs. 12A and 12B are views for illustrating a third example of the method for preparing a mold for forming the anti-glare layer. Fig. 12A is an illustrative view of the first step and Fig. 12B is a schematic view illustrating the final shape of the mold.

In the third example of the method of preparing mold 30, mold member 31 is processed by electrical discharge machining with the use of electrode 40 provided with fine pattern work 45, as illustrated in Fig. 12A. This makes it possible to prepare mold 30 having uniform fine irregular shapes according to fine pattern work 45, as illustrated in Fig. 12B.

Fig. 13 is a schematic view illustrating a fine irregular structure that is prepared using the mold shown in Fig. 12B.

Fine irregular structure 20B having uniform irregular shapes as shown in Fig. 13 can be prepared by forming the anti-glare layer using mold 30 of the third example. Fine irregular structure 20B is, for example, an irregular structure having a trapezoidal cross-sectional shape. This makes it possible to control the inclination angle so that the film thickness variation of the anti-reflection layer is within ±20% in terms of film thickness over the entire area of fine irregular structure 20B.

Hereinabove, exemplary embodiments of the present invention have been described.

In the foregoing exemplary embodiments, molding is described as a method for preparing the fine irregular structure of the anti-reflection member, and some specific examples of the method of preparing the mold are described. However, the method of preparing the fine irregular structure of the anti-reflection member is not limited to the above-described examples. It is possible to use any production method as long as it can produce the fine irregular structure having an inclination angle specified by the invention.

## INDUSTRIAL APPLICABILITY

The present invention is applicable to an anti-reflection member for preventing reflection of display devices.

## REFERENCE MARKS IN THE DRAWINGS

| | |
|---|---|
| 10, 10A, 10B, 10C, 10D, 10E | anti-reflection member |
| 12, 50 | substrate |
| 14, 14A | anti-reflection layer |
| 20, 20A, 20B | fine irregular structure |
| 21 | convex portion |
| 30 | mold |
| 31 | mold member |
| 32 | particle |
| 40 | electrode |
| 45 | fine pattern work |

## Claims

**1.** An anti-reflection member comprising:

a substrate;
an anti-glare layer provided on a surface of the substrate and including a fine irregular structure; and
an anti-reflection layer formed over the anti-glare layer and including a plurality of films laminated on each other,
wherein in the anti-glare layer, a surface of the fine irregular structure having an inclination angle that results in a film thickness variation of the anti-reflection layer falling within ±20%, inclusive, in terms of film thickness occupies 60% or greater of an area in which the fine irregular structure is formed, the film thickness variation of the anti-reflection layer originating from a variation of the inclination angle of the surface of the fine irregular structure with respect to the surface of the substrate.

**2.** The anti-reflection member according to claim 1,
wherein a relationship between the inclination angle and the film thickness variation of the anti-reflection layer is defined so that, when the anti-reflection layer is formed with a film thickness X on a surface in which the inclination angle is 0°, a film thickness of the anti-reflection layer formed on a surface in which the inclination angle is $\theta$ is $X \cdot \cos\theta$.

**3.** The anti-reflection member according to claim 1,
wherein when a median value of a film thickness range that results in a lower reflectivity than other ranges in a relationship graph of film thickness and reflectivity of the anti-reflection layer is defined as a film thickness ratio of 1, the anti-reflection layer is formed with a film thickness ratio of 1 on a surface in which the inclination angle is 0°, and in the anti-glare layer, a surface in which the inclination angle is equal to or less than 36.8° occupies 60% or greater of the area in which the fine irregular structure is formed.

**4.** The anti-reflection member according to claim 1,
wherein when a median value of a film thickness range that results in a lower reflectivity than other ranges in a relationship graph of film thickness and reflectivity of the anti-reflection layer is defined as a film thickness ratio of 1, the anti-reflection layer is formed with a film thickness ratio of 1.2 on a surface in which the inclination angle is 0°, and in the anti-glare layer, a surface in which the inclination angle is equal to or less than 48.1° occupies 70% or greater of the area in which the fine irregular structure is formed.

**5.** The anti-reflection member according to claim 1,
wherein at least one of the plurality of films of the anti-reflection layer is formed by a process of condensing a source material evaporated in vacuum onto a surface.

**6.** The anti-reflection member according to claim 1, wherein at least one of the plurality of films of the anti-reflection layer is formed by a wet process.

**7.** A method of manufacturing an anti-reflection member, comprising:

forming a fine irregular structure in a substrate by performing a molding process using a mold having an irregular surface so as to form an anti-glare layer; and
forming, over the fine irregular structure, an anti-reflection layer including a plurality of films laminated on each other,
wherein the irregular surface of the mold is formed so that a surface of a transferred irregular surface having an inclination angle that results in a film thickness variation of the anti-reflection layer falling within ±20%, inclusive, in in terms of film thickness occupies 60% or greater of the transferred irregular surface, the film thickness variation originating from a variation in the inclination angle of the transferred irregular surface with respect to a surface of the substrate.

**8.** The method according to claim 7,
wherein the irregular surface of the mold is formed by forming irregularities in one surface of a mold member by a blasting process, an etching process, or electrical discharge machining, and performing an additional blasting process using particles having a diameter smaller than the irregularities.

**9.** The method according to claim 7,
wherein the irregular surface of the mold is formed by forming an irregular surface in one surface of a mold member by a blasting process, an etching process, or electrical discharge machining, and polishing or etching the irregular surface.

**10.** The method according to claim 7,
wherein the irregular surface of the mold is formed by performing electrical discharge machining on one surface of the mold using an electrode in which an irregular pattern is formed.

**11.** The method according to claim 7,
wherein when a median value of a film thickness range that results in a lower reflectivity than other ranges in a relationship graph of film thickness and reflectivity of the anti-reflection layer is defined as a film thickness ratio of 1, the anti-reflection layer is formed with a film thickness ratio of 1 on a surface in which the inclination angle is 0°, and the irregular surface of the mold is formed so that a portion having an inclination angle of equal to or less than 36.8° occupies 60% or greater of the transferred irregular surface.

**12.** The method according to claim 7,

wherein when a median value of a film thickness range that results in a lower reflectivity than other ranges in a relationship graph of film thickness and reflectivity of the anti-reflection layer is defined as a film thickness ratio of 1, the anti-reflection layer is formed with a film thickness ratio of 1.2 on a surface in which the inclination angle is 0°, and the irregular surface of the mold is formed so that a portion having an inclination angle of equal to or less than 48.1° occupies 70% or greater of the transferred irregular surface.

FIG. 1

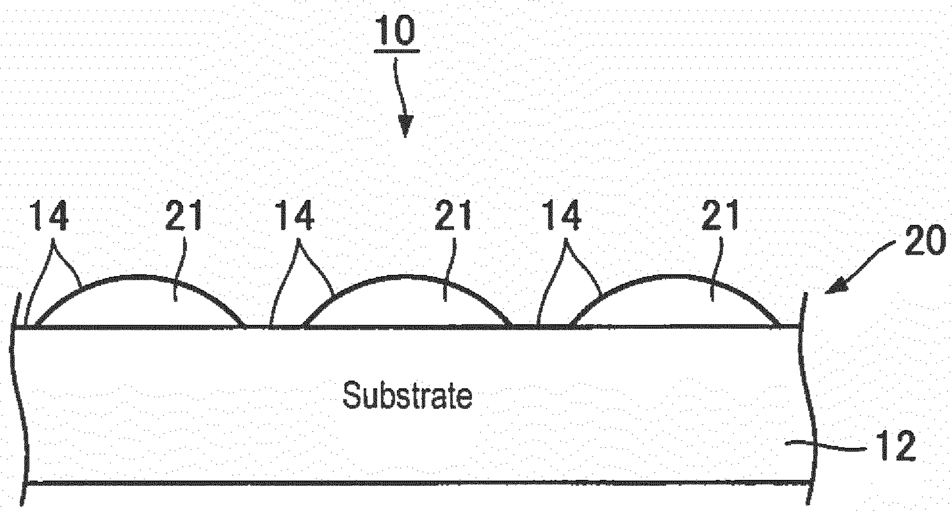


FIG. 2

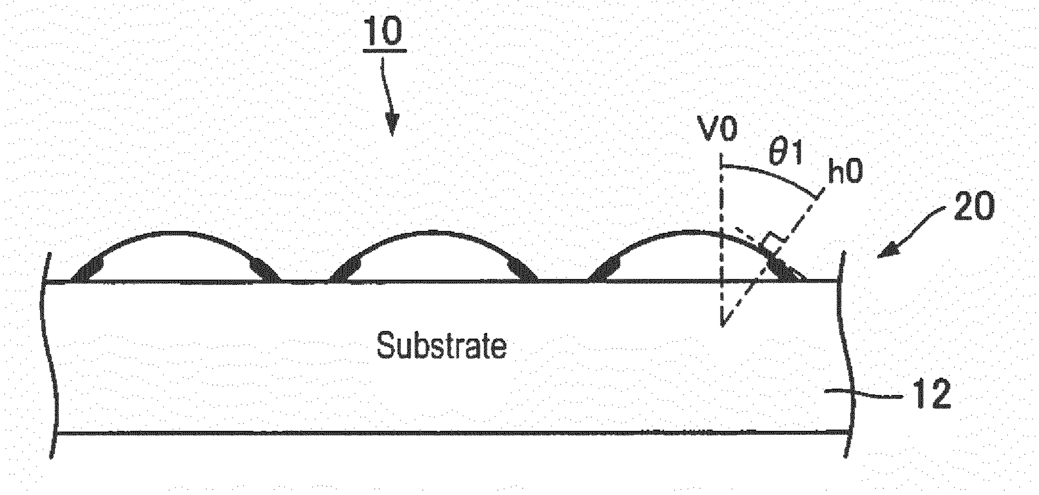

FIG. 3

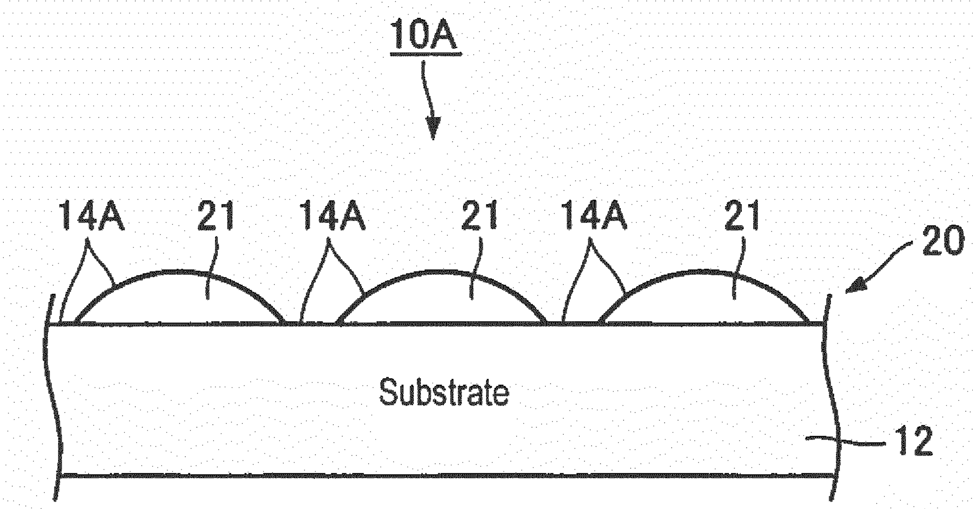
10A
14A
21
14A
21
14A
21
20
Substrate
12

FIG. 4

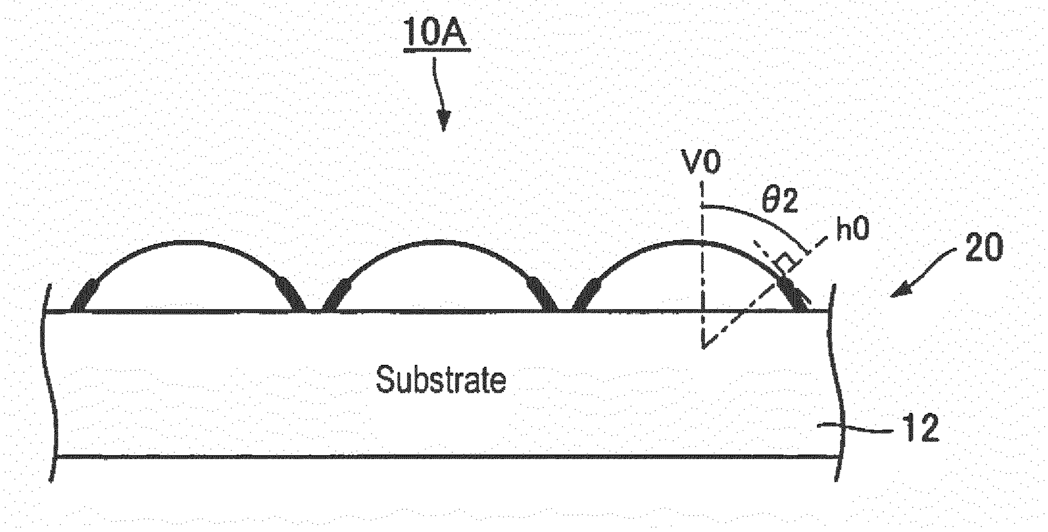
10A
V0
θ2
h0
20
Substrate
12

FIG. 5

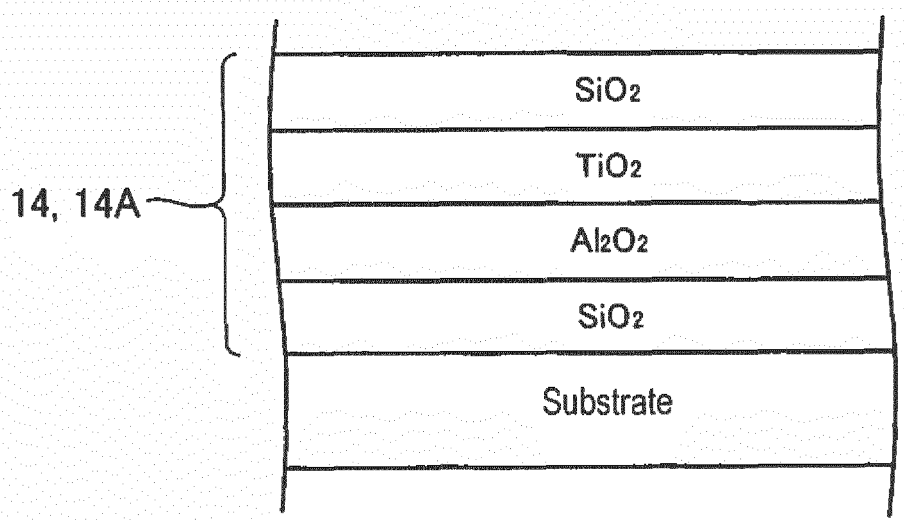
SiO2
TiO2
Al2O2
SiO2
Substrate
14, 14A

FIG. 6

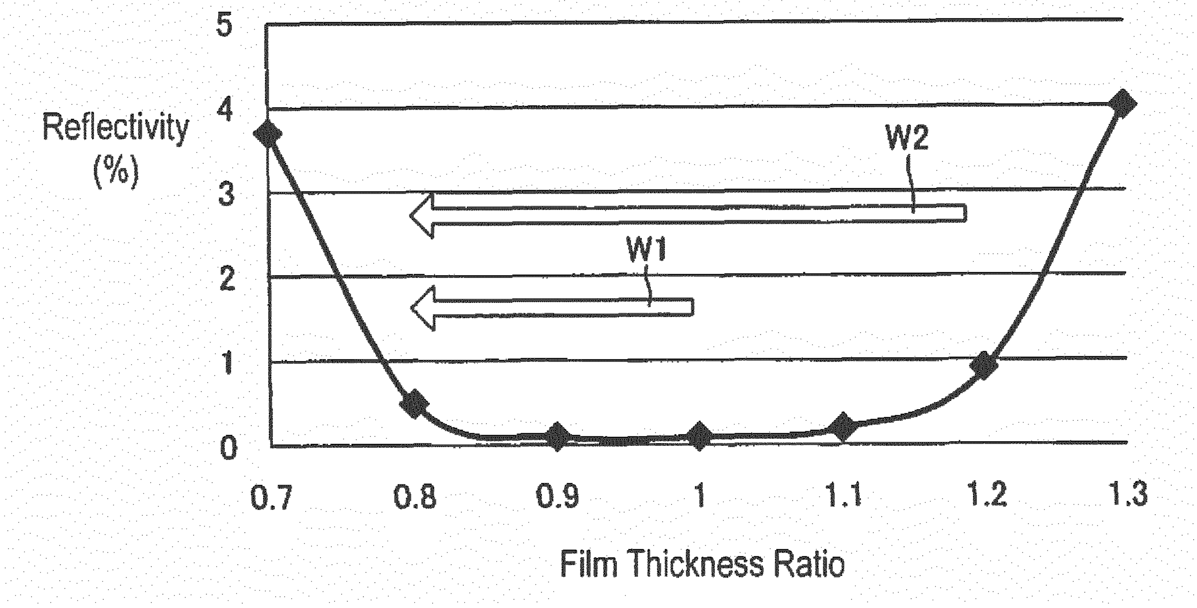
Reflectivity (%)
5
4
3
2
1
0
W2
W1
0.7
0.8
0.9
1
1.1
1.2
1.3
Film Thickness Ratio

FIG. 7A

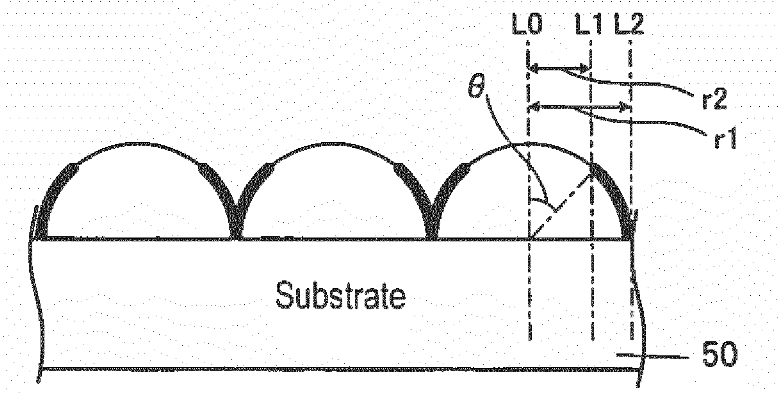


FIG. 7B

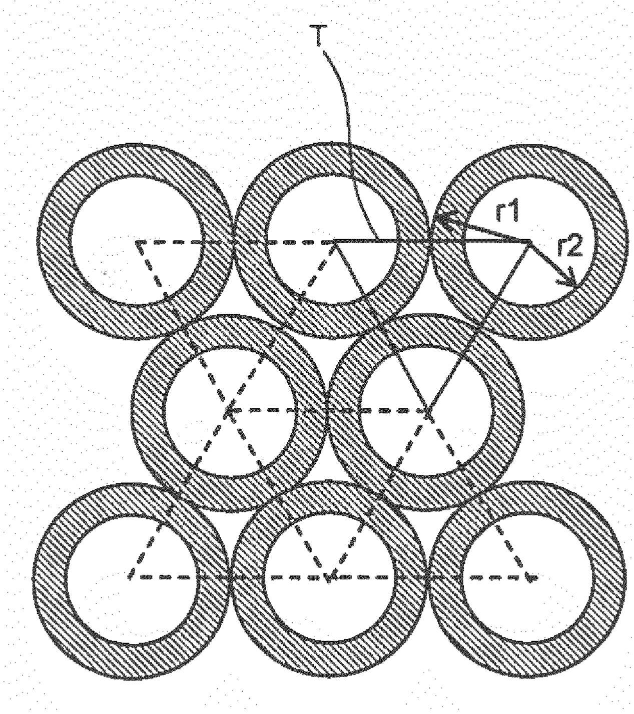

FIG. 8A

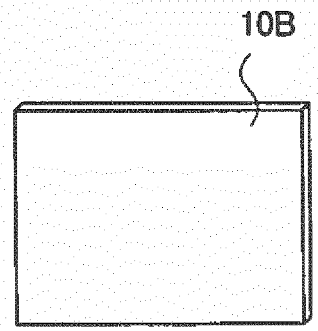


FIG. 8B

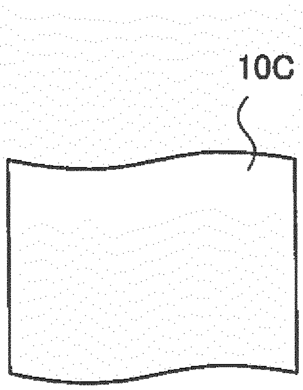


FIG. 8C

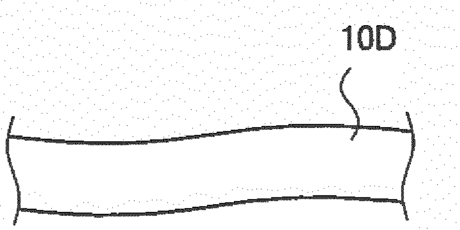


FIG. 8D

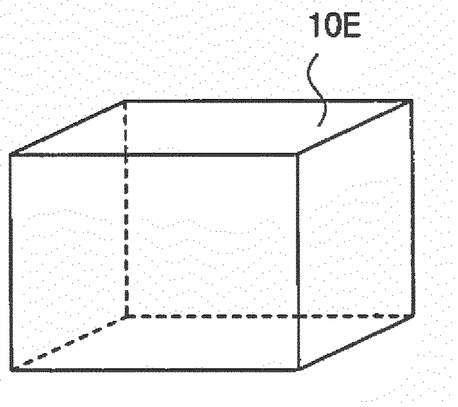

FIG. 9A

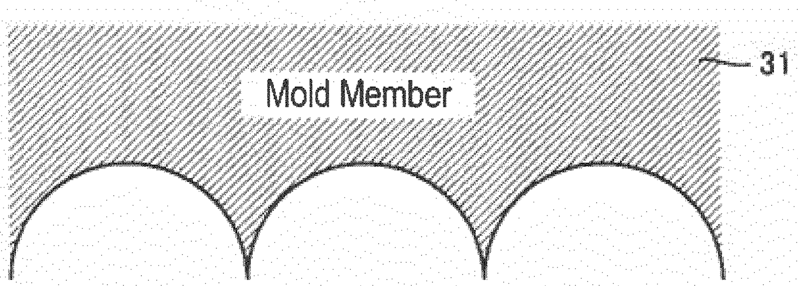


FIG. 9B

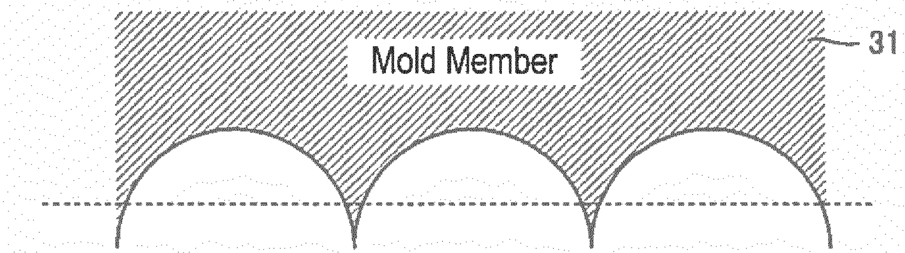


FIG. 9C

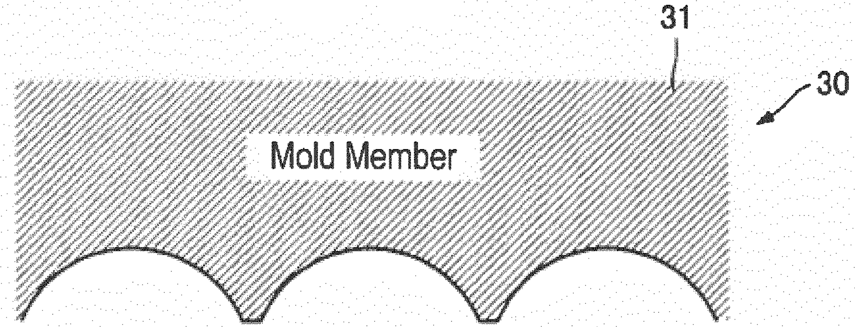

FIG. 10A

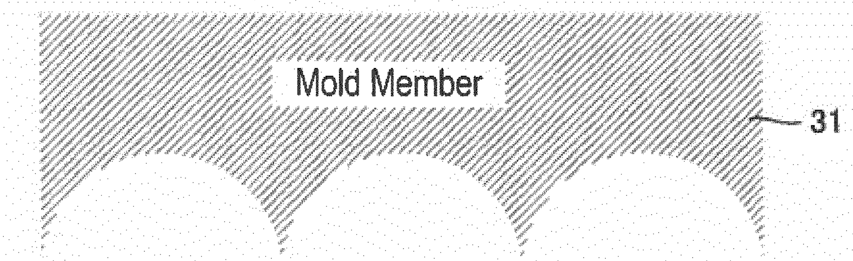


FIG. 10B

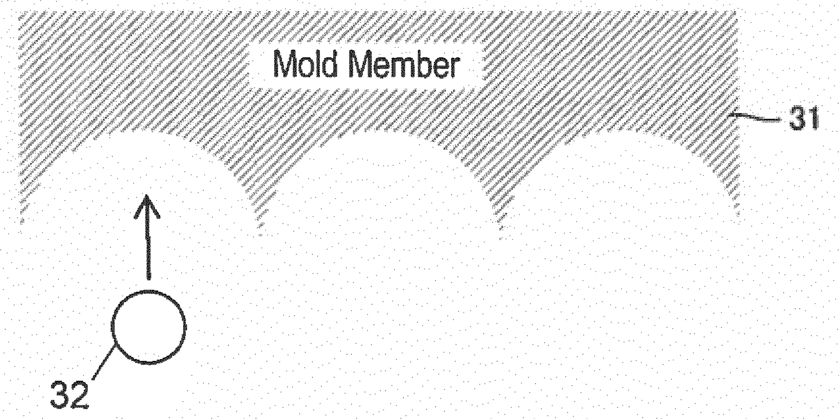


FIG. 10C

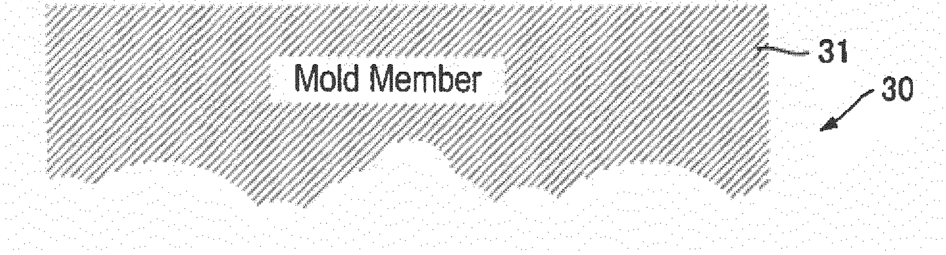

FIG. 11

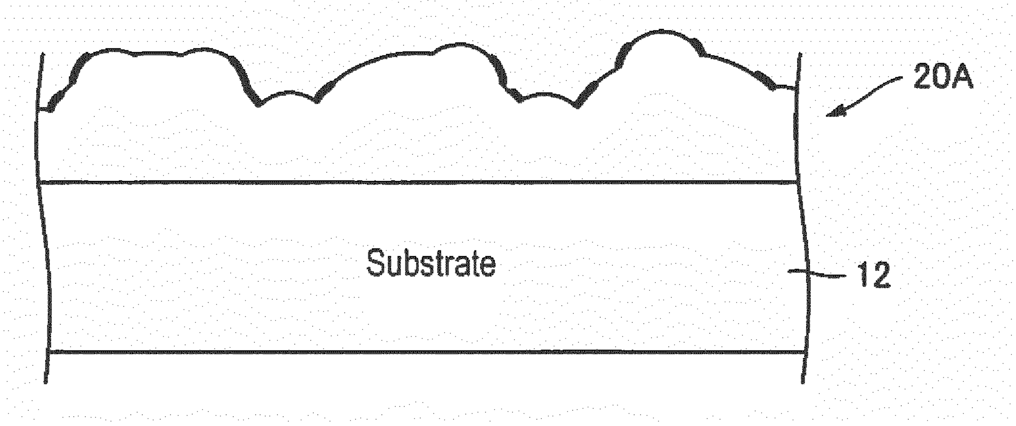

FIG. 12A

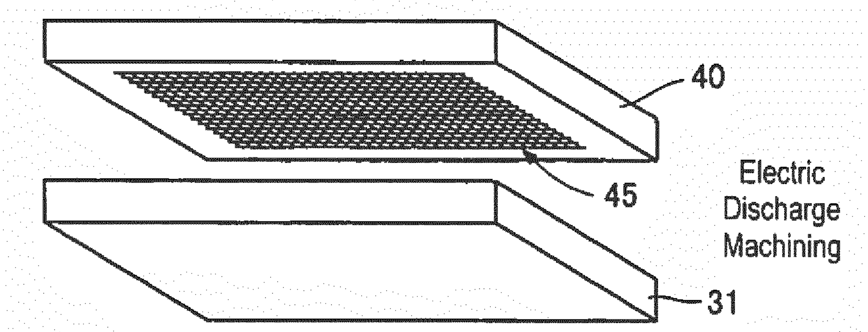


FIG. 12B

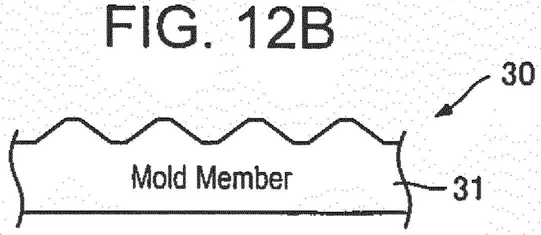


FIG. 13

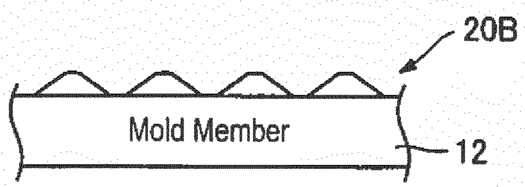

## INTERNATIONAL SEARCH REPORT

International application No.
PCT/JP2015/004457

A. CLASSIFICATION OF SUBJECT MATTER
*G02B1/115*(2015.01)i, *B32B7/02*(2006.01)i, *B32B3/30*(2006.01)i, *G02B5/02*(2006.01)i

According to International Patent Classification (IPC) or to both national classification and IPC

B. FIELDS SEARCHED

Minimum documentation searched (classification system followed by classification symbols)
G02B1/115, B32B7/02, G02B5/02, G02B3/00, G02C7/02, B32B3/30, B24C1/00, B24C11/00, B29C59/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2010-079101 A (Fujifilm Corp.),<br>08 April 2010 (08.04.2010),<br>paragraphs [0017] to [0030], [0239] to [0294];<br>fig. 1(b)<br>& US 2010/0079867 A1<br>paragraphs [0048] to [0069], [0292] to [0367]<br>& CN 101685177 A | 1-6<br>7-12 |
| X<br>A | JP 2010-079099 A (Fujifilm Corp.),<br>08 April 2010 (08.04.2010),<br>paragraphs [0012] to [0014], [0039], [0042],<br>[0108] to [0160]<br>& US 2010/0079868 A1<br>paragraphs [0047] to [0061], [0086], [0089],<br>[0178] to [0255]<br>& CN 101685168 A | 1-6<br>7-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 November 2015 (25.11.15) | 08 December 2015 (08.12.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/004457

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2010-078886 A (Fujifilm Corp.), 08 April 2010 (08.04.2010), paragraphs [0020] to [0023], [0144] to [0148], [0221] to [0282] (Family: none) | 1-6<br>7-12 |
| X<br>Y | JP 2009-086410 A (Konica Minolta Opto, Inc.), 23 April 2009 (23.04.2009), paragraphs [0033] to [0043], [0070] to [0076], [0371] to [0424]; fig. 1 (Family: none) | 1-7,11-12<br>8-10 |
| X<br>Y | JP 2005-195819 A (Daicel Chemical Industries, Ltd.), 21 July 2005 (21.07.2005), paragraphs [0018] to [0024], [0039] to [0040], [0062] (Family: none) | 1-7,11-12<br>8-10 |
| Y | WO 2008/069324 A1 (Mitsubishi Rayon Co., Ltd.), 12 June 2008 (12.06.2008), paragraphs [0083] to [0097] & TW 200834125 A | 8-10 |
| Y | JP 2009-204687 A (Sumitomo Chemical Co., Ltd.), 10 September 2009 (10.09.2009), paragraphs [0063] to [0089] & WO 2009/107544 A1 & KR 10-2010-0117630 A & CN 101960334 A & TW 200951517 A | 8-10 |
| Y | JP 2004-333936 A (Fuji Photo Film Co., Ltd.), 25 November 2004 (25.11.2004), paragraphs [0049] to [0062] & US 2004/0223220 A1 paragraphs [0076] to [0089] & EP 1475217 A1 & KR 10-1130629 B1 | 8-10 |
| A | JP 2012-128321 A (Canon Inc.), 05 July 2012 (05.07.2012), paragraph [0056]; fig. 6 (Family: none) | 1-12 |
| A | JP 2011-095310 A (Nippon Electric Glass Co., Ltd.), 12 May 2011 (12.05.2011), paragraphs [0024], [0039] (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H06234175 B
- WO 2008084604 A